# EUROPEAN PATENT APPLICATION

(11) **EP 1 126 189 A1**
(43) Date of publication of application: **22.08.2001**
(21) Application number: 01102578.0
(22) Date of filing: 06.02.2001
(51) Int. Cl.: F16D 25/08, B60K 17/346

(54) **Transaxle of four wheel drive vehicle**

(30) Priority: 09.02.2000 JP 2000032132
(71) Applicant: FUJI JUKOGYO KABUSHIKI KAISHA, Tokyo-To (JP)
(72) Inventor: Hirase, Hiromi, c/o Fuji Jukogyo K.K., Tokyo-To (JP)
(74) Representative: Sajda, Wolf E., Dipl.-Phys.

(57) **Abstract**

A hydraulic multiple disc clutch (60) for a center differential (50) used for a transaxle of a four wheel drive vehicle having a clutch piston (67) for pressing clutch plates (65, 66) includes a piston retainer (71) rotatably connected with the clutch piston (67) through a release bearing (72) for pressing the clutch plates (65, 66) according to a hydraulic pressure applied to the clutch piston (67), a spring retainer (73) engaged with the piston retainer (71) and axially, slidably engaged with the clutch hub (63) and at least one return spring (74) provided between the clutch hub (63) and the spring retainer (73) for biasing the clutch plates (65, 66) in a releasing direction.

## Description

### BACKGROUND OF THE INVENTION

### 1. Field of the invention

The present invention relates to a transaxle for a four wheel drive vehicle and more particularly to a hydraulic multiple disc clutch for a center differential in the transaxle.

### 2. Prior art

For example, as a power unit for a four wheel drive Vehicle, Japanese Patent Application Laid-open No.Toku-Kai-Hei 2-290731 by the patent applicant of the present invention, discloses a transaxle mounted in a longitudinal direction of the vehicle. In case of this transaxle, an engine, a torque converter, a front differential, automatic transmission and a center differential are arranged from front to rear in line., Thus arranged drive train has an advantage that since the power unit can be disposed approximately on a longitudinal center line of the vehicle, the length of left and right axle shafts can be equalized.

However, this type of transaxle has a tendency that the total length of the power unit becomes long. Particularly, for a four wheel drive vehicle, since the center differential and the hydraulic multiple disc clutch are positioned adjacent to a toe board or under a tunnel member, in case where the number of gear stages is attempted to increase, the rear portion of the transaxle are projected into the passenger compartment.

Especially, a prior hydraulic multiple disc clutch for a center differential has a piston and a pressure plate for actuating the clutch and a return spring for biasing the clutch in a releasing direction. The return spring is engaged with a boss of a bearing for supporting a rear drive shaft. Therefore, when the number of gear stages is attempted to increase, in order to reduce the projection into the passenger compartment, it is necessary to realize a compact clutch. However, although it is possible to reduce the diameter of the clutch, the diameter of the boss can not be reduced because of the bearing capacity. Accordingly, it is difficult to reduce the size of the return spring. Further, since a gear for detecting the number of rotation of rear wheels must be mounted on the rear drive shaft additionally, a space for accommodating this gear is one of causes of enlarging the total length of the power unit.

### SUMMARY OF THE INVENTION

It is an object of the present invention to provide a transaxle for a four wheel drive vehicle having a hydraulic multiple disc clutch down-sized in a radial and axial direction of the clutch and capable of multiplying the number of gear stages without having an effect on a space for the passenger compartment. In order to attain these objects, the hydraulic multiple disc clutch having a clutch piston for pressing clutch plates includes a piston retainer rotatably connected with the clutch piston through a release bearing for pressing the clutch plates according to a hydraulic pressure applied to the clutch piston, a spring retainer engaged with the piston retainer and axially, slidably engaged with a clutch hub and at least one return spring provided between the clutch hub and the spring retainer for biasing the clutch plates in a releasing direction. Further, there is provided a gear for detecting the number of rotation of a rear drive shaft on an outer periphery edge of the spring retainer.

### DESCRIPTION OF DRAWINGS

Fig. 1 is an enlarged sectional view showing a center differential and surrounding components according to an embodiment of the present invention;
Fig. 2 is a skeleton diagram of a transaxle for a four wheel drive vehicle;
Fig. 3 is a front view of a retainer; and
Fig. 4 is an explanatory view showing a condition of a piston when a hydraulic multiple disc clutch is engaged.

### DETAILED DESCRIPTION OF PREFERRED EMBODIMENT

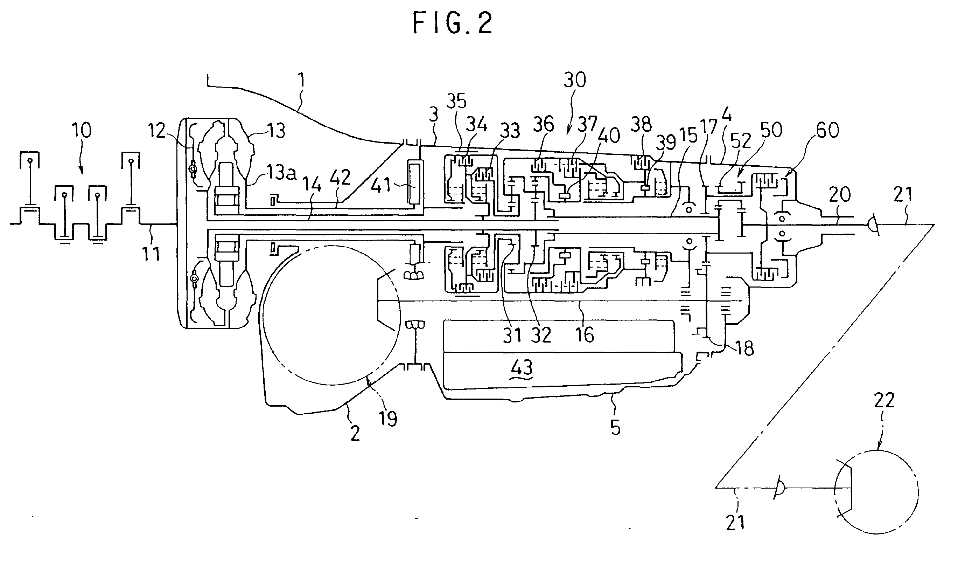

Referring now to Fig. 2, reference numeral 10 denotes an engine whose crankshaft 11 is connected with a torque converter 13 having a lockup clutch and housed by a torque converter case 1. An output shaft of the torque converter 13, that is, an input shaft 14 of the transmission is inputted to an automatic transmission 30 in a transmission case 3 connected with the rear end of the torque converter case 1 and the differential case 2. An output shaft 15 from the automatic transmission 30 is in a coaxial relationship with each other and is coaxilally connected with a center differential 50 in an extension case 4 which is connected with the rear end of the transmission case 3.

Further, a front drive shaft 16 is arranged in parallel with the input shaft 14 and the output shaft 15 in the transmission case 3. Further, an oil pan is attached to the under surface of the transmission case 3.

The front drive shaft 16 is engaged at the rear end thereof with the center differential 50 through a pair of reduction gears 17, 18 (transfer drive gear 17, transfer driven gear 18). The front end of the front drive shaft 16 is constituted so as to transmit driving force to front wheels through a front differential 19.

On the other hand, the center differential 50 is interlocked with a rear drive shaft 20, a propeller shaft 21 and a rear differential 22 and the like so as to transmit driving force from the center differential 50 to rear wheels.

The automatic transmission 30 has a front planetary gear 31 and a rear planetary gear 32 and in relation to these planetary gears includes a high clutch 33, a reverse clutch 34, a brake band 35, a forward clutch 36, an overrunning clutch 37, a low and reverse brake 38 and one-way clutches 39, 40. By selectively engaging these clutches and brakes (friction and engagement elements), the automatic transmission 30 can obtain transmission of four forward speed ratios and one reverse speed.

In front of the automatic transmission 30, there is provided an oil pump 41 constantly driven by a drive shaft connected with an impeller sleeve 13a of the torque converter 13. Further, a control valve body 43 is accommodated in the oil pan 5. The control valve body 43 supplies or discharges oil to and from these friction engagement elements to selectively engage or disengage those elements.

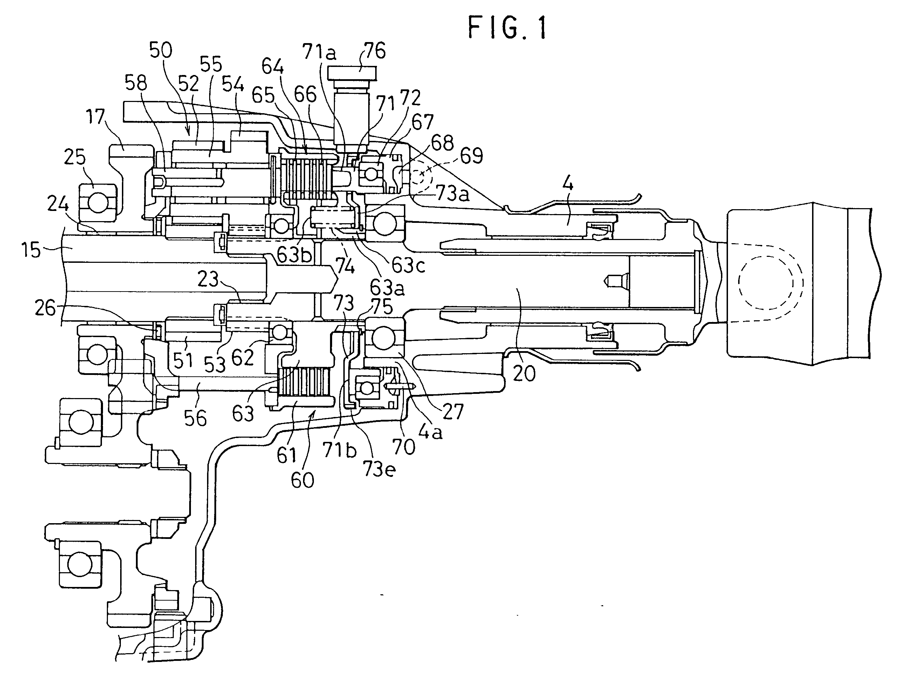

Next, describing the center differential 50 by referring to Fig. 1, the transmission output shaft 15 is rotatably fitted to the rear drive shaft 20 through a radial bearing 23. The transfer drive gear 17 is rotatably fitted over the transmission output shaft 15 through a radial bearing 24 and a thrust bearing 26.

Further, the transfer gear 17 and transmission output shaft 15 are supported by the transmission case 3 through a ball bearing 25, respectively. The rear drive shaft 20 is supported by a rear ball bearing 27 fitted to the inner periphery surface of a cylindrical projection 4a formed at the rear of the extension case 4.

Further, a compound planetary gear type center differential 50 is coaxially provided between the transmission output shaft 15, the rear drive shaft 20 and the transfer drive gear 17.

That is, a first sun gear 51 with a large diameter is spline-fitted over the transmission output shaft 15 which is an input shaft of the center differential 50 and a first pinion 52 with a small diameter meshes with the first sun gear 51 around the transmission output shaft 15, thus a first gear train being formed. Further, a second sun gear 53 with a small diameter is fitted over the rear drive shaft 20 for driving rear wheels and a second pinion 54 with a large diameter meshes with the second sun gear 53 around the rear drive shaft 20. The second sun gear 53 is mounted adjacent to the first sun gear 51. Thus, a second gear train is formed.

The first pinion 52 and the second pinion 54 are integrally formed with a pinion member 55 and in this embodiment, three pinion members 55 are rotatably supported by respective pinion shafts 58 which are secured to a carrier 56. The carrier 56 is connected with the transfer gear 17 so as to drive front wheels.

Further, there is provided a hydraulic multiple disc clutch 60 for limiting a differential motion of the center differential 50 at the rear of the carrier 56. The hydraulic multiple disc clutch 60 is down-sized to be smaller than the maximum external diameter of the center differential 50. Specifically, the carrier 56 is connected at the rear end thereof with a cylindrical clutch drum 61 whose rear end is open. The clutch drum 61 is rotatably supported by the rear drive shaft 20 through a front ball bearing 62. Further, a sleeve 63a of a clutch hub 63 is spline-fitted over the rear drive shaft 20 in such a manner that the outer periphery of the clutch hub 63 is in a face-to-face relation with the inner periphery of the clutch drum 61 and there is provided a clutch section 64 between these.

The clutch section 64 comprises a plurality of drive plates 65 spline-fitted over the outer periphery of the clutch hub 63 and a plurality of driven plates 66 spline-fitted to the inner periphery of the clutch drum 61 and these drive and driven plates 65, 66 are disposed in an interleaving relation to each other. When these drive and driven plates 65, 66 are engaged, torque is transmitted between the rear drive shaft 20 and the carrier 56.

On the other hand, a cup-shaped piston 67 is provided between the rear end of the clutch section 64 and the inner rear wall of the extension case 4. Further, an oil pressure chamber 68 is formed between the piston 67 and the extension case 4. The oil chamber 68 communicates with an oil supply passage 69 through which hydraulic pressure is supplied from a hydraulic control apparatus (not shown) to axially slide the piston 67.

The piston 67 is restricted to rotate by a pin 70 so as to travel only in the axial direction. A release bearing 72 is fitted to the inner periphery surface of the cup of the piston 67. Further, the inner race of the release bearing 72 is fitted over a piston retainer 71 having a plurality of projections 71a to press the clutch section 64. Thus, the piston retainer 71 is rotatably connected with the piston 67 through the release bearing 72.

The piston retainer 71 is engaged with a spring retainer 73. At the base of the spring retainer 73, a concave 73a is formed and on the rear side of the clutch hub 63, a recess 63b is formed. There is provided a return spring 74 between the concave 73a and the recess 63b in order to bias the clutch in releasing direction.

The spring retainer 73 is spline-fitted over the outer periphery of the sleeve 63a of the clutch hub 63 so as to be able to rotate integrally with the clutch hub 63 and to travel in the axial direction. Further, there is provided a C -type snap ring 75 to restrict backward traveling of the spring retainer 73.

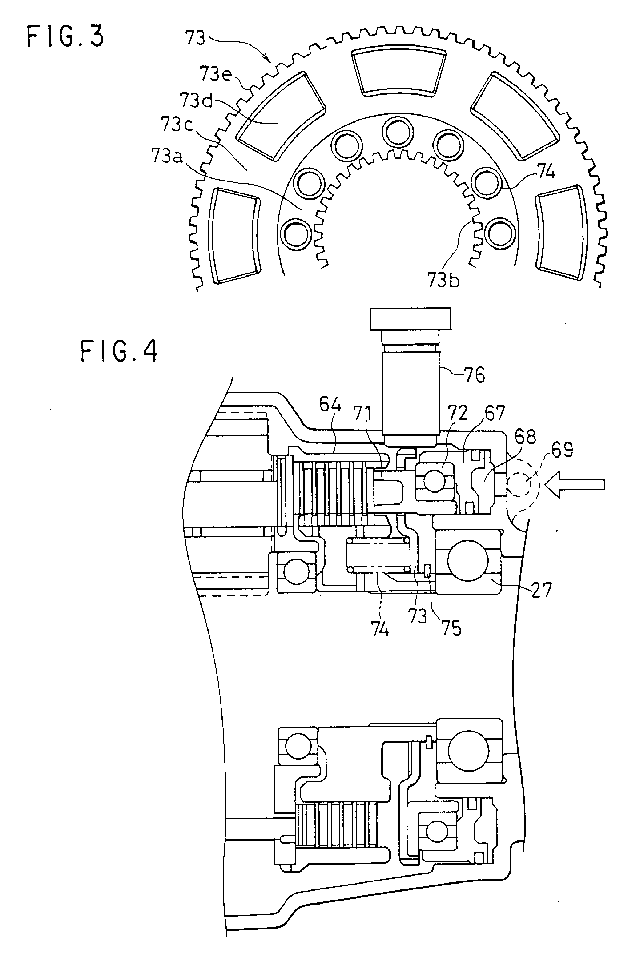

In more detail, as shown in Fig. 3, the spring retainer 73 is formed by an annular member. A plurality of recesses 63c are formed at an equal interval circumferentially around the inner periphery edge of the spring retainer 73 and the return spring 74 is inserted into the respective recesses 73a. Further, there is provided a spline 73b on the inner periphery edge of the spring retainer 73 and the spline 63 c provided on the sleeve 63a of the clutch hub 63 meshes with the spline 73b. Further, a plane section 73c is formed on the spring retainer 73 between the recesses 73a and the outer periphery edge of the spring retainer 73 and a piston surface 71b of the piston retainer 71 contacts the plane section 73c. Further, a plurality of windows 73d are circumferentially formed at a specified interval on the plane section 73c and the projection 71a of the piston retainer 71 projects in the frontal direction through the window 73d, respectively.

Further, a gear 73e is formed on the outer periphery of the spring retainer 73 in order to detect the rotation number of the rear drive shaft 20. A rotation sensor 76 is disposed at a position of the extension case 4 opposite to the gear 73e. Further, the top end of the gear 73e is bent so as to secure a specified width corresponding to the detection sensitivity of the sensor 76.

That is, since the projection 71a of the piston retainer 71 projects from the window 73d of the spring retainer 73 and the piston surface 71b of the piston retainer 71 contacts the plane section 73c of the spring retainer 73, the piston retainer 71 and the spring retainer 73 rotates integrally with the clutch hub 63 and at the same time slides in the axial direction. Thus, the diameter of the hydraulic multiple disc clutch 60 can be reduced without reducing the diameter of the rear ball bearing 27. Further, since the gear for detecting the rotation number of the rear drive shaft 20 is provided on the spring retainer 73, the axial length can be reduced compared with a case where a special gear is additionally provided. When the diameter of the hydraulic multiple disc clutch 60 is reduced, the capacity of clutch is prevented from being decreased by increasing the number of clutch discs.

In thus constituted transmission, first the power of the engine 10 is inputted to the automatic transmission 30 through the torque converter 13 and the input shaft 14. The power shifted by the automatic transmission 30 is inputted from the output shaft 15 to the first sun gear 51 of the center differential 50.

The shifted power inputted to the first sun gear 51 is divided into the reduction gear 17 connected integrally with the carrier 55 and the second sun gear 53. In case where either of front or rear wheels slips and as a result there occurs a specified or more difference of revolution between the reduction gear 17 and the second sun gear 53, differential motion is limited by the hydraulic multiple disc clutch 60.

The hydraulic multiple disc clutch 60 is engaged or disengaged according to the hydraulic pressure supplied to the hydraulic pressure chamber 68. When the hydraulic pressure is supplied from the hydraulic pressure control apparatus to the hydraulic pressure chamber 68 through an oil supply passage 69, as shown in Fig. 4, the piston 67 travels toward the clutch section 64 and the piston retainer 71 is pressed forwardly through the release bearing 72.

Then, the piston retainer 71 and the spring retainer 73 rotate integrally with the clutch hub 63. The rotating force of the piston retainer 71 is absorbed by the release bearing 72 and as a result the piston 67 travels in the axial direction without rotating.

That is, since the piston 67 is restricted to rotate by the pin 70 secured to the extension case 4, the outer race of the release bearing 72 does not rotate and only the inner race rotates. Therefore, when the piston 67 travels in the axial direction, the piston retainer 71 travels in the axial direction while rotating.

As a result, the piston surface 71b of the piston retainer 71 presses the plane section 73c of the spring retainer 73 and the spring retainer 73 travels against the biasing force of the return spring 74 in the axial direction. Further, the projection 71a of the piston retainer 71 projecting from the window 73d of the spring retainer 73 presses the clutch section 64. Then, a plurality of the drive plates 65 spline-fitted over the outer periphery of the clutch hub 63 is engaged with a plurality of the driven plates 66 spline-fitted to the inner periphery of the clutch drum 61. As a result, torque distribution and differential rotation between the front drive shaft 16 and the rear drive shaft 20 are limited.

In this case, since the hydraulic multiple plate disc clutch 60 is down-sized in both radial and axial directions, the number of transmission stages can be increased without having effect on the interior space of the passenger compartment.

While the presently preferred embodiments of the present invention have been shown and described, it is to be understood that these disclosures are for the purpose of illustration and that various changes and modifications may be made without departing from the scope of the invention.

## Claims

1. A transaxle for a four wheel drive vehicle, comprising
- a center differential (50) for distributing a driving force output from a transmission (30) of the vehicle to front and rear wheels,
- a clutch drum (61) connected to the center differential (50),
- a clutch hub (63) connected with a rear drive shaft (20),
- a hydraulic multiple disc clutch (60) for limiting a differential motion between the front and rear wheels by engaging clutch plates (65, 66) between the clutch drum (61) and the clutch hub (63),
- an extension case (4) for accomodating the hydraulic multiple disc clutch (60) and a clutch piston (67) provided in the extension case (4) for actuating the multiple disc clutch (60), the hydraulic multiple disc clutch (60) comprising:
- a piston retainer (71) rotatably connected with the clutch piston (67) through a release bearing (72) for pressing the clutch plates (65, 66) according to a hydraulic pressure applied to the clutch piston (67) ;
- a spring retainer (73) engaged with the piston retainer (71) and axially, slidably engaged with the clutch hub (63); and
- at least one return spring (74) provided between the clutch hub (63) and the spring retainer (73) for biasing the clutch plates (65, 66) in a releasing direction.

2. The transaxle according to claim 1,
wherein the release bearing (72) is a ball bearing.

3. The transaxle according to claim 1 or 2,
wherein the return spring (74) is inserted at one end thereof in a part in proximity of an inner periphery edge of the spring retainer (73), and is inserted at the other end thereof in a part in proximity of an axis of the clutch hub (63).

4. The transaxle according to any of claims 1 to 3,
further comprising a gear (73e) formed on an outer periphery edge of the spring retainer (73) for detecting the number of rotation of the rear drive shaft (20).

5. The transaxle according to any of claims 1 to 4,
wherein the hydraulic multiple disc clutch (60) is constituted to be smaller than the center differential (50) in diameter.
